(19) Europäisches Patentamt / European Patent Office / Office européen des brevets

(11) **EP 3 985 624 A1**

(12) **EUROPÄISCHE PATENTANMELDUNG**

(43) Veröffentlichungstag:
**20.04.2022 Patentblatt 2022/16**

(21) Anmeldenummer: **20202025.1**

(22) Anmeldetag: **15.10.2020**

(51) Internationale Patentklassifikation (IPC):
**G07C 9/28** (2020.01) **G07C 9/20** (2020.01)
**G07C 9/15** (2020.01)

(52) Gemeinsame Patentklassifikation (CPC):
**G07C 9/28;** G07C 9/15

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **SKIDATA AG**
**5083 Grödig/Salzburg (AT)**

(72) Erfinder:
• **Haslinger, Martin**
**5083 Grödig/Salzburg (AT)**

• **Lechner, Walter**
**5083 Grödig/Salzburg (AT)**
• **Haidacher, Martin**
**5083 Grödig/Salzburg (AT)**

(74) Vertreter: **Karakatsanis, Georgios**
**Haft Karakatsanis Patentanwaltskanzlei**
**Dietlindenstrasse 18**
**80802 München (DE)**

Bemerkungen:
Geänderte Patentansprüche gemäss Regel 137(2) EPÜ.

(54) **VERFAHREN ZUR ZUGANGSKONTROLLE FÜR PERSONEN UND SYSTEM ZUR DURCHFÜHRUNG DES VERFAHRENS**

(57) Es wird ein Verfahren zur Zugangskontrolle bei einem Zugangskontrollsystem für Personen umfassend zumindest eine Zugangskontrollvorrichtung (16), welche jeweils einem Zugang zugeordnet ist, vorgeschlagen, wobei jede Zugangskontrollvorrichtung (16) zumindest eine am Zugang definiert angeordnete Antenne (1, 2, 8, 9, 10, 11) aufweist, welche in den Zugangsbereich (3), d.h. in einen Bereich vorgegebener Länge und Breite, welchen ein Besucher beim Zugang durchschreiten muss und in dem sich bedingt durch dessen Dimensionierung nur eine Person befinden kann, abstrahlt, wobei sämtliche Antennen (1, 2, 8, 9, 10, 11) einer Zugangskontrollvorrichtung (16) auf einer Antennenebene liegen, wobei die zumindest eine Antenne (1, 2, 8, 9, 10, 11) in vorgegebenen Abständen Beacons enthaltend eine eindeutige Zugangs-ID, welche den Zugang, an dem die zumindest eine Antenne (1, 2, 8, 9, 10, 11) angebracht ist, eindeutig identifiziert und eine eindeutige Antennen-ID sendet, wobei die von einem mobilen Gerät (14) empfangenen Beacons anhand der RSSIs (Received Signal Strength Indicator) ausgewertet werden, wodurch die Distanz des mobilen Gerätes (14) zu der zumindest einen Antenne (1, 2, 8, 9, 10, 11) ermittelt wird, wobei, wenn die ermittelte Distanz des mobilen Gerätes (14) zur zumindest einer Antenne (1, 2, 8, 9, 10, 11) einer Zugangskontrollvorrichtung (16) einen Schwellenwert unterschreitet, eine im mobilen Gerät (14) gespeicherte ID, der eine Zugangsberechtigung eindeutig zuordenbar ist und die empfangene Zugangs-ID dieser Zugangskontrollvorrichtung (16) an einen Server (15) oder an die Zugangskontrollvorrichtung (16) zur Auswertung der Gültigkeit der der ID zugeordneten Zugangsberechtigung übermittelt werden, wobei bei für die Zugangs-ID gültiger Zugangsberechtigung Zugang gewährt wird.

FIG. 6

**Beschreibung**

Die vorliegende Erfindung bezieht sich auf ein Verfahren zur Zugangskontrolle für Personen gemäß dem Oberbegriff des Patentanspruchs 1. Ferner bezieht sich die Erfindung auf ein System zur Zugangskontrolle für Personen, insbesondere zur Durchführung des erfindungsgemäßen Verfahrens.

Aus dem Stand der Technik sind Verfahren zur Zugangskontrolle für Personen bekannt. Hierbei ist in der Regel vorgesehen, eine Zugangskontrolle mittels des berührungslosen Auslesens von Zugangsberechtigungen durchzuführen, wobei Zugangskontrollvorrichtungen vorgesehen sind, die Mittel zum Erfassen und Auswerten der Zugangsberechtigungen sowie mechanische oder sonstig ausgeführte Sperrorgane aufweisen, die nach Vorliegen einer gültigen Zugangsberechtigung automatisch oder manuell von einer Sperrstellung in eine Freistellung überführt werden. Ferner sind Zugangskontrollvorrichtungen bekannt, welche ohne Sperrorgane ausgeführt sind.

Zum berührungslosen Auslesen von Zugangsberechtigungen können nach dem Stand der Technik unterschiedliche Standards zur berührungslosen Kommunikation, wie beispielsweise WLAN, BLE (Bluetooth Low Energy), RFID, NFC verwendet werden, wobei zu diesem Zweck die Zugangskontrollvorrichtungen zumindest eine Leseeinrichtung bzw. Antenneneinheit aufweisen, welche Signale eines Datenträgers enthaltend eine Zugangsberechtigung oder eine ID, der eine Zugangsberechtigung zugeordnet ist, empfangen.

Einige dieser Standards, wie beispielweise NFC oder das berührungslose Auslesen der Zugangsberechtigungen mittels Barcode-Scanner weisen eine sehr geringe Reichweite auf, so dass in nachteiliger Weise keine "hands-free" - sondern eine "touch and go" -Funktionalität zur Verfügung gestellt wird.

Bei Standards, die eine größere Reichweite aufweisen und somit die gewünschte "hands-free" Funktionalität zur Verfügung stellen, besteht die Notwendigkeit, die Reichweite der Leseeinrichtungen bzw. Antennen derart einzustellen, dass Datenträger nur in einem bestimmten Abstand und in der richtigen Richtung erfasst werden, um Trennungs- und Kollisionsprobleme mit Datenträgern von in der Schlange stehenden Personen oder Fahrzeugen zu vermeiden. Ferner besteht die Notwendigkeit einer zuverlässigen Fahrbahn- bzw. Zugangstrennung im Fall eines mehrspurigen Zugangs.

Zudem soll berücksichtigt werden, dass sich als Datenträger dienende Mobiltelefone in Abhängigkeit der Antennenanordnung und der Stärke bzw. Auslegung der eingebauten Hardware hinsichtlich der Emittierung von Signalen unterschiedlich verhalten.

Der vorliegenden Erfindung liegt die Aufgabe zugrunde, ein Verfahren zur Zugangskontrolle bei einem Zugangskontrollsystem für Personen umfassend zumindest eine Zugangskontrollvorrichtung anzugeben, im Rahmen dessen die Überprüfung einer Zugangsberechtigung anhand der Auswertung einer von einem Datenträger über einen Standard zur drahtlosen Kommunikation an das Zugangskontrollsystem gesendeten ID, der zumindest eine Zugangsberechtigung eindeutig zuordenbar ist, erfolgt, durch dessen Durchführung die Zugangskontrolle vereinfacht wird.

Insbesondere soll eine "hands-free" Zugangskontrolle ermöglicht werden, wobei Trennungs- und Kollisionsprobleme mit Datenträgern von in der Schlange stehenden Personen oder Fahrzeugen vermieden werden und eine zuverlässige Fahrbahn- bzw. Zugangstrennung im Fall eines mehrspurigen Zugangs gewährleistet wird. Insbesondere soll der einer Zugangskontrollvorrichtung in Zugangsrichtung am nächsten befindliche Datenträger ermittelt werden, um anschließend die von diesem Datenträger gesendete ID, der zumindest eine Zugangsberechtigung eindeutig zuordenbar ist, auszuwerten und bei gültiger Zugangsberechtigung Zugang zu gewähren.

Des Weiteren soll ein System zur Zugangskontrolle für Personen, insbesondere zur Durchführung des erfindungsgemäßen Verfahrens angegeben werden.

Diese Aufgabe wird für ein Verfahren durch die Merkmale des Patentanspruchs 1 gelöst. Ein System zur Zugangskontrolle für Personen, insbesondere zur Durchführung des erfindungsgemäßen Verfahrens ist Gegenstand des Patentanspruchs 16. Weitere erfindungsgemäße Ausgestaltungen und Vorteile gehen aus den entsprechenden Unteransprüchen hervor.

Demnach wird ein Verfahren zur Zugangskontrolle bei einem Zugangskontrollsystem für Personen vorgeschlagen, wobei das Zugangskontrollsystem zumindest eine Zugangskontrollvorrichtung umfasst, welche jeweils einem Zugang zugeordnet ist, wobei jede Zugangskontrollvorrichtung zumindest eine am Zugang definiert angeordnete Antenne aufweist, welche in den Zugangsbereich, d.h. in einen Bereich vorgegebener Länge und Breite, welchen ein Besucher beim Zugang durchschreiten muss und in dem sich bedingt durch dessen Dimensionierung nur eine Person befinden kann, abstrahlt, wobei sämtliche Antennen einer Zugangskontrollvorrichtung jeweils auf einer Antennenebene liegen, im Rahmen dessen die zumindest eine Antenne in vorgegebenen Abständen, vorzugsweise in Abständen von 100-200 msec, Beacons enthaltend eine eindeutige Zugangs-ID, welche den Zugang, an dem die zumindest eine Antenne angebracht ist, eindeutig identifiziert und eine eindeutige Antennen-ID sendet, wobei die von einem mobilen Gerät empfangenen Beacons anhand der RSSIs (Received Signal Strength Indicator) ausgewertet werden, wodurch die Distanz des mobilen Gerätes zu der zumindest einen Antenne ermittelt wird. Die Beacons sind vorzugsweise BLE (Bluetooth Low Energy)- Beacons, es kann jedoch jeder weitere geeignete Standard verwendet werden. RSSI Verfahren sind dem Fachmann bestens bekannt.

Hierbei ist vorgesehen, dass wenn die ermittelte Distanz des mobilen Gerätes zur zumindest einer Antenne einer Zugangskontrollvorrichtung einen vorgegebenen Schwellenwert unterschreitet, eine im mobilen Gerät gespeicherte ID, der eine Zugangsberechtigung eindeutig zuordenbar ist und die empfangene Zugangs-ID dieser Zugangskontrollvorrichtung an einen Server des Zugangskontrollsystems oder an die jeweilige Zugangskontrollvorrichtung zur Auswertung der Gültigkeit der der ID zugeordneten Zugangsberechtigung über einen Standard zur drahtlosen Kommunikation übermittelt werden, wobei bei für die Zugangs-ID gültiger Zugangsberechtigung, beispielweise durch eine Steuerung eines Sperrorgans der Zugangskontrollvorrichtung, Zugang gewährt wird.

Wenn keine Sperrorgane vorgesehen sind und keine für die Zugangs-ID gültige Zugangsberechtigung vorliegt, kann der Betreiber der Zugangskontrollvorrichtung informiert werden, wobei ein optisches und/oder akustisches Signal ausgegeben werden kann. Die Zugangskontrollvorrichtungen sind mit einem Server des Zugangskontrollsystems verbunden.

Besonders vorteilhaft ist eine Ausgestaltung, bei der drei Antennen vorgesehen sind, wodurch die Genauigkeit der Lokalisierung des mobilen Gerätes in Bezug auf den Zugang erhöht wird.

Gemäß einer Weiterbildung der Erfindung weist die zumindest eine Zugangskontrollvorrichtung zumindest zwei vorgegeben und in definiertem Abstand zueinander angeordnete Antennen auf, welche in den Zugangsbereich, d.h. in einen Bereich vorgegebener Länge und Breite, welchen ein Besucher beim Zugang durchschreiten muss und in dem sich bedingt durch dessen Dimensionierung nur eine Person befinden kann, abstrahlen, wobei sämtliche Antennen auf einer Antennenebene liegen, wobei die Auswertung der von einem mobilen elektronischen Gerät empfangenen Beacons dadurch erfolgt, dass in einem ersten Schritt alle empfangenen Beacons in Zugangskontrollvorrichtungen basierend auf der eindeutigen Zugangs-ID gruppiert werden.

Für jede individuelle Zugangs-ID, werden erfindungsgemäß alle zugehörigen Beacons wie folgt ausgewertet:

-   Pro Antennen-ID wird die empfangene Signalstärke der Beacons (RSSI) optional mittels eines Moving-Average-Filters, vorzugsweise mittels eines exponentiellen Moving-Average Filters geglättet, wodurch einzelne Ausreißer in der Signalstärke gefiltert werden;
-   Aus den vorhandenen n Antennen werden mindestens ein und maximal $\binom{n}{2}$ Antennenpaare gebildet, wobei anhand der empfangenen Signalstärke der Beacons von jeweils zwei Antennen eines Antennenpaares durch Bilateration die Distanz des mobilen elektronischen Gerätes zu einer virtuellen Linie auf der Antennenebene, welche die Antennen des jeweiligen Antennenpaares miteinander verbindet und somit zur Antennenebene als Länge der Lotstrecke der am weitesten von der Antennenebene entfernten möglichen Position des mobilen elektronischen Gerätes zur virtuellen Linie und zur Antennenebene ermittelt wird;

-   die ermittelten Distanzen zu der virtuellen Linie auf der Antennenebene , welche die Antennen des jeweiligen Antennenpaares miteinander verbindet, werden ausgewertet, um festzustellen, ob mindestens eine oder eine vorgegebene Anzahl der ermittelten Distanzen unter einem bestimmten Schwellenwert fällt, wobei, wenn dies der Fall ist, eine im mobilen Gerät gespeicherte ID, der eine Zugangsberechtigung eindeutig zuordenbar ist und die empfangene Zugangs-ID an einen Server oder an die Zugangskontrollvorrichtung zur Auswertung der Gültigkeit der der ID zugeordneten Zugangsberechtigung über einen Standard zur drahtlosen Kommunikation übermittelt werden, wobei bei für die Zugangs-ID gültiger Zugangsberechtigung Zugang gewährt wird.

Gemäß einer Weiterbildung der Erfindung ist vorgesehen, dass die ermittelten Distanzen des mobilen elektronischen Gerätes zu einer virtuellen Linie auf der Antennenebene, welche die Antennen des jeweiligen Antennenpaares miteinander verbindet, dazu verwendet werden, um jeweils eine virtuelle Antenne auf der virtuellen Verbindungslinie zwischen den betrachteten Antennen des jeweiligen Antennenpaares zu definieren und ihr eine virtuelle Distanz zum mobilen Gerät, d.h. einen virtuellen Radius, welcher der ermittelten Distanz zur virtuellen Linie entspricht, an der Position der virtuellen Antenne zuzuweisen. Die Position der virtuellen Antenne entspricht dem Lotfußpunkt der Lotstrecke der am weitesten von der Antennenebene entfernten möglichen Position des mobilen elektronischen Gerätes zur virtuellen Linie und zur Antennenebene.

In vorteilhafter Weise wird die zumindest eine dadurch definierte virtuelle Antenne verwendet, um in Kombination mit einer weiteren Antenne, die auch eine virtuelle oder vorhandene Antenne sein kann, ein virtuelles Antennenpaar zu bilden und anhand der empfangenen Signalstärke der Beacons dieser Antennen mittels Bilateration die Distanz des mobilen elektronischen Gerätes zu einer virtuellen Linie auf der Antennenebene, welche die Antennen des virtuellen Antennenpaares miteinander verbindet und somit zur Antennenebene als Länge der Lotstrecke der am weitesten von der Antennenebene entfernten möglichen Position des mobilen elektronischen Gerätes zur virtuellen Linie und zur Antennenebene zu ermitteln, wobei sämtliche ermittelte Distanzen des mobilen elektronischen Gerätes zu einer virtuellen Linie auf der Antennenebene, welche die Antennen des jeweiligen, auch virtuellen Antennenpaares miteinander verbindet, ausgewertet werden.

Auf diese Weise werden die vorhandenen Antennen untereinander zum Zweck einer Bilateration beliebig kombiniert, um die Genauigkeit der Ermittlung der Distanz des mobilen Gerätes zur Antennenebene zu erhöhen.

Das mobile Gerät kann beispielsweise als Mobiltelefon, Tablet oder Smartwatch ausgeführt sein.

Gemäß der Erfindung sind die Antennen als Richtantennen ausgeführt und/oder gezielt abgeschirmt, um die Richtcharakteristik in Richtung des Zugangsbereichs zu maximieren. Des Weiteren kann die Sendestärke jeder Antenne angepasst werden, um dadurch den gewünschten Erkennungsbereich im Zugangsbereich besser modellieren zu können.

Die RSSI Auswertung der Beacons kann im mobilen Gerät erfolgen, wobei, wenn mindestens eine oder eine vorgegebene Anzahl der ermittelten Distanzen des mobilen Gerätes zu der Antennenebene einer Zugangskontrollvorrichtung einen Schwellenwert unterschreitet, eine im mobilen Gerät gespeicherte ID, der eine Zugangsberechtigung eindeutig zuordenbar ist und die über die Beacons empfangene Zugangs-ID dieser Zugangskontrollvorrichtung an einen Server des Zugangskontrollsystems oder an die jeweilige Zugangskontrollvorrichtung, die anhand der Zugangs-ID ermittelbar ist, zur Auswertung der Gültigkeit der der ID zugeordneten Zugangsberechtigung mittels eines Standards zur drahtlosen Kommunikation übermittelt werden, wobei bei für die Zugangs-ID gültiger Zugangsberechtigung Zugang gewährt wird.

Im Rahmen einer vorteilhaften Weiterbildung der Erfindung ist vorgesehen, dass bei der RSSI Auswertung der Beacons das Modell des jeweiligen mobilen Gerätes dadurch berücksichtigt wird, dass ein modellspezifischer Korrekturwert für den Schwellenwert herangezogen wird, um Unterschiede hinsichtlich der Empfangssensitivität auszugleichen. Die Korrekturwerte können in einer Kennlinie abgelegt sein. Ferner kann vorgesehen sein, dass zur Optimierung der RSSI-Auswertung der Beacons Daten vorhandener Distanz-Sensoren der mobilen Geräte, die beispielsweise als Infrarot Sensoren ausgeführt sein können, verwendet werden, um feststellen zu können, ob ein mobiles Gerät in einer Tasche, beispielweise in einer Hosentasche, oder in einer Tragetasche bzw. in einem Rucksack des Benutzers steckt, wobei, wenn dies der Fall ist, zusätzlich ein vorgegebener Offset verwendet wird, welcher den Schwellenwert verändert; wenn ein mobiles Gerät in einer Tasche des Benutzers steckt, wird der Schwellenwert für die Distanz erhöht, um den schwächeren Empfang in der Tasche zu kompensieren. Zudem kann vorgesehen sein, dass zur Optimierung der RSSI-Auswertung der Beacons im entsprechenden mobilen Gerät ermittelt wird, ob das mobile Gerät gerade in Verwendung ist, d.h. ob das Display eingeschaltet ist, wobei, wenn dies der Fall ist, zusätzlich ein vorgegebener Offset verwendet wird, welcher den Schwellenwert für die Distanz verringert.

Diese Parameter werden im Rahmen der Auswertung in den mobilen Geräten berücksichtigt. Erfindungsgemäß werden die im mobilen Gerät durchzuführenden Schritte des Verfahrens durch eine App gesteuert, wobei in der App vorzugsweise die Antennenkonfiguration, insbesondere beispielsweise die räumliche Anordnung der Antennen der Zugangskontrollvorrichtungen und deren Abstand zueinander hinterlegt ist, um die Auswertung der Signalstärke der empfangenen Beacons und die Ermittlung der Distanz des mobilen elektronischen Gerätes zu den Antennen bzw. zur Antennenebene, die im Rahmen dieser Beschreibung erläutert werden, durchführen zu können. Für den Fall, dass sich die Antennenkonfiguration der Antennen der Zugangskontrollvorrichtungen in Abhängigkeit der jeweiligen Zugangskontrollvorrichtung unterscheidet, ist in der App die Antennenkonfiguration der Antennen der Zugangskontrollvorrichtungen in Abhängigkeit der Zugangs-ID hinterlegt. Ferner sind in der App die modellspezifischen Korrekturwerte für den Schwellenwert und die Offsets die herangezogen werden, wenn ein mobiles Gerät in einer Tasche des Benutzers steckt oder wenn das mobile Gerät gerade in Verwendung ist, hinterlegt.

Im Rahmen der Auswertung der Beacons im mobilen Gerät können gemäß einer Weiterbildung der Erfindung im mobilen Gerät die ermittelten Distanzen bei jedem Zutritt aufgezeichnet werden, wobei bei n-maliger Unterschreitung eines vorgegebenen unteren Schwellenwertes, wobei n eine vorgegebene ganze Zahl $\geq 1$ ist, die empfangenen Signalstärken der Beacons vor der RSSI Auswertung um einen vorgegebenen Faktor reduziert werden, wodurch ein Übersprechen vermieden wird. Auf diese Weise wird eine nutzerabhängige Adaption realisiert.

Alternativ zur Auswertung der Beacons im mobilen Gerät kann die RSSI Auswertung der Beacons in einem Server des Zugangskontrollsystems erfolgen, wobei zu diesem Zweck zwischen dem mobilen Gerät und dem Server eine Verbindung mittels eines Standards zur drahtlosen Kommunikation hergestellt wird, wobei mittels der Verbindung die empfangenen Beacons gemeinsam mit der im mobilen Gerät gespeicherten ID, der eine Zugangsberechtigung eindeutig zuordenbar ist, der empfangenen Zugangs-ID, optional die Daten vorhandener Distanz-Sensoren, optional die Information ob das mobile Gerät gerade in Verwendung ist und optional das Modell des jeweiligen mobilen Gerätes an den Server weitergeleitet werden, wobei wenn mindestens eine oder eine vorgegebene Anzahl der ermittelten Distanzen zu der Antennenebene einer Zugangskontrollvorrichtung einen Schwellenwert unterschreitet, eine Auswertung der Gültigkeit der der ID zugeordneten Zugangsberechtigung durchgeführt wird, wobei bei für die Zugangs-ID gültiger Zugangsberechtigung Zugang gewährt wird.

Der Standard zur drahtlosen Kommunikation zwischen dem mobilen Gerät und Komponenten des Zugangskontrollsystems kann ein WIFI, GSM, LTE, 5G oder Bluetooth Standard sein.

Die Erfindung wird anhand der beigefügten Figuren beispielhaft näher erläutert. Es zeigen:

Figur 1: Eine schematische Darstellung der Ermittlung der Distanz des mobilen elektronischen Gerätes zu einer virtuellen Linie auf der Antennenebene, welche die Antennen eines Antennenpaares miteinander verbindet und somit zur Antennenebene durch Bilateration; und

Figur 2: Eine schematische Darstellung einer möglichen Anordnung der Antennen auf der Antennenebene;

Figur 3: Eine schematische Darstellung einer weiteren möglichen Anordnung der Antennen auf der Antennenebene;

Figur 4: Eine schematische Darstellung einer weiteren möglichen Anordnung der Antennen auf der Antennenebene;

Figur 5: Eine schematische Darstellung eines Zugangsbereichs sowie einer möglichen Anordnung der Antennen auf der Antennenebene; und

Figur 6: Eine schematische Darstellung eines Zugangsbereichs sowie einer weiteren möglichen Anordnung der Antennen auf der Antennenebene sowie der Übermittlung der im mobilen Gerät gespeicherten ID und der empfangenen Zugangs-ID an das Zugangskontrollsystem nach der Auswertung der Beacons, wenn mindestens eine oder eine vorgegebene Anzahl der ermittelten Distanzen einen Schwellenwert unterschreitet.

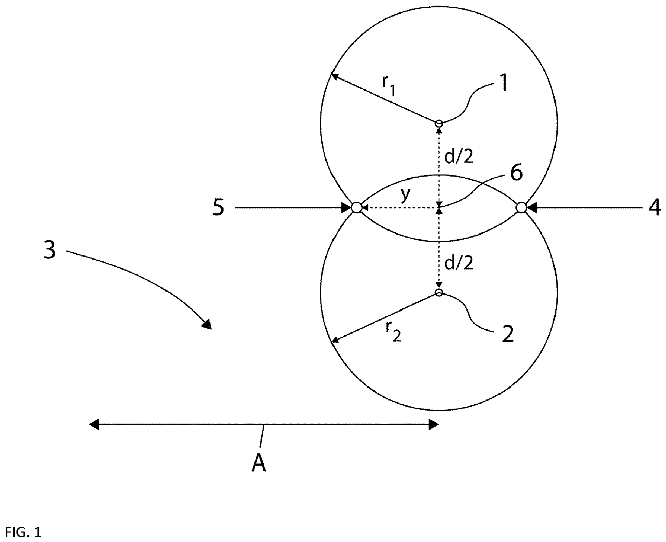

Gemäß einer Ausgestaltung der Erfindung und bezugnehmend auf Figur 1 weist die zumindest eine Zugangskontrollvorrichtung des Zugangskontrollsystems zumindest zwei vorgegeben und in definiertem Abstand zueinander angeordnete Antennen auf, wobei sämtliche Antennen auf einer Antennenebene liegen. Die Auswertung der von einem mobilen elektronischen Gerät, beispielsweise von einem Mobiltelefon empfangenen Beacons erfolgt dadurch, dass in einem ersten Schritt alle empfangenen Beacons in Zugangskontrollvorrichtungen basierend auf der eindeutigen Zugangs-ID gruppiert werden, wobei für jede individuelle Zugangs-ID alle zugehörigen Beacons wie folgt ausgewertet werden:
In einem zweiten, optionalen Schritt wird pro Antennen-ID die empfangene Signalstärke der Beacons (RSSI) optional mittels eines Moving-Average-Filters, vorzugsweise mittels eines exponentiellen Moving-Average Filters geglättet, wodurch einzelne Ausreißer in der Signalstärke gefiltert werden.

In einem dritten Schritt werden aus den vorhandenen n Antennen, n≥2, mindestens ein und maximal $\binom{n}{2}$ Antennenpaare gebildet, wobei anhand der empfangenen Signalstärke der Beacons von jeweils zwei Antennen eines Antennenpaares durch Bilateration die Distanz des mobilen elektronischen Gerätes zu einer virtuellen Linie auf der Antennenebene, welche die Antennen des jeweiligen Antennenpaares miteinander verbindet und somit zur Antennenebene als Länge der Lotstrecke der am weitesten von der Antennenebene entfernten möglichen Position des mobilen elektronischen Gerätes zur virtuellen Linie und zur Antennenebene ermittelt wird. Dies wird anhand Figur 1 veranschaulicht.

In Figur 1 sind zwei ein Antennenpaar bildende Antennen 1, 2 dargestellt, wobei zwischen diesen Antennen durch Bilateration eine Distanz y des mobilen elektronischen Gerätes zu einer virtuellen Linie auf der Antennenebene, welche die Antennen 1, 2 miteinander verbindet und somit zur Antennenebene ermittelt wird. Die Figur ist eine Draufsicht auf dem Zugangsbereich. Hierbei gilt die Formel: $y = \sqrt{r_1^2 - \left(\frac{r_1^2 - r_2^2 + d^2}{2d}\right)^2}$ wobei d den Abstand der Antennen zueinander, r1 die nach der RSSI-Auswertung ermittelte Distanz zur Antenne 1, r2 die nach der RSSI-Auswertung ermittelte Distanz zur Antenne 1 darstellt. Die Antennenebene verläuft senkrecht zur Figurebene.

Bei dem in Figur 1 gezeigten Beispiel wird der Einfachheit halber angenommen, dass die Signalstärken der von den Antennen 1, 2 empfangenen Beacons gleich sind, so dass r1=r2. Der Zugangsbereich ist mit 3 bezeichnet, wobei der Pfeil A die Breite des Zugangsbereichs darstellt. Die Schnittpunkte der Kugeln mit den Radien r1 und r2 um die Antenne 1 bzw. 2 liegen auf einem Schnittkreis, wobei erfindungsgemäß lediglich die am entferntesten zur Antennenebene liegenden Schnittpunkte 4 und 5 betrachtet werden und aus Plausibilitätsgründen Position 4 nicht berücksichtigt wird, da diese nicht im Zugangsbereich 3 liegt. Somit ist bei dem gezeigten Beispiel Position 5 die ermittelte Position des mobilen elektronischen Gerätes, welche eine Distanz y zur Antennenebene aufweist, die als Länge der Lotstrecke der am weitesten von der Antennenebene entfernten möglichen Position des mobilen elektronischen Gerätes zur virtuellen Linie und zur Antennenebene definiert ist.

Erfindungsgemäß werden die ermittelten Distanzen y des mobilen elektronischen Gerätes zu der virtuellen Linie auf der Antennenebene , welche die Antennen des jeweiligen Antennenpaares miteinander verbindet, ausgewertet, um festzustellen, ob mindestens eine oder eine vorgegebene Anzahl der ermittelten Distanzen unter einem bestimmten Schwellenwert fällt, wobei, wenn dies der Fall ist, eine im mobilen Gerät gespeicherte ID, der eine Zugangsberechtigung eindeutig zuordenbar ist und die empfangene Zugangs-ID an einen Server oder an die Zugangskontrollvorrichtung zur Auswertung der Gültigkeit der Zugangsberechtigung über einen Standard zur drahtlosen Kommunikation übermittelt werden, wobei bei für die Zugangs-ID gültiger Zugangsberechtigung Zugang gewährt wird. Wenn die Auswertung der Gültigkeit der Zugangsberechtigung im Server stattfindet, wird das Ergebnis der Auswertung an die jeweilige Zugangskontrollvorrichtung übermittelt, wobei für den Fall, dass die Zugangskontrollvorrichtung ein Sperrorgan aufweist, dieses bei gültiger Zugangsberechtigung im Öffnungssinne betätigt wird.

Gemäß einer Weiterbildung der Erfindung kann die ermittelte Distanz y zu einer virtuellen Linie auf der Antennenebene , welche die Antennen 1, 2 des Antennenpaares miteinander verbindet, dazu verwendet werden, um jeweils eine virtuelle Antenne auf der virtuellen Verbindungslinie zwischen den betrachteten Antennen des jeweiligen Antennenpaares und somit auf der Antennenebene zu definieren und ihr die virtuelle Distanz y zum mobilen Gerät, d.h. einen virtuellen Radius an der dem Lotfußpunkt der Lotstrecke der am weitesten von der Antennenebene entfernten möglichen Position des mobilen elektronischen Gerätes zur virtuellen Linie und zur Antennenebene entsprechenden Position 6 der virtuellen Antenne zuzuweisen.

Die dadurch definierte virtuelle Antenne kann in vorteilhafter Weise verwendet werden, um in Kombination mit einer weiteren Antenne, die eine virtuelle oder vorhandene Antenne sein kann, ein virtuelles Antennenpaar zu bilden und mittels Bilateration die Distanz des mobilen elektronischen Gerätes zu einer virtuellen Linie auf der Antennenebene, welche die Antennen des virtuellen Antennenpaares miteinander verbindet und somit zur Antennenebene als Länge der Lotstrecke der am weitesten von der Antennenebene entfernten möglichen Position des mobilen elektronischen Gerätes zur virtuellen Linie zu ermitteln, wobei sämtliche ermittelte Distanzen des mobilen elektronischen Gerätes, nämlich die mittels vorhandener und virtueller Antennenpaare ermittelten Distanzen ausgewertet werden, um festzustellen, ob mindestens eine oder eine vorgegebene Anzahl der ermittelten Distanzen unter einem bestimmten Schwellenwert fällt. Zum Zweck der Bilateration wird ein Radius y um die Position 6 der virtuellen Antenne verwendet.

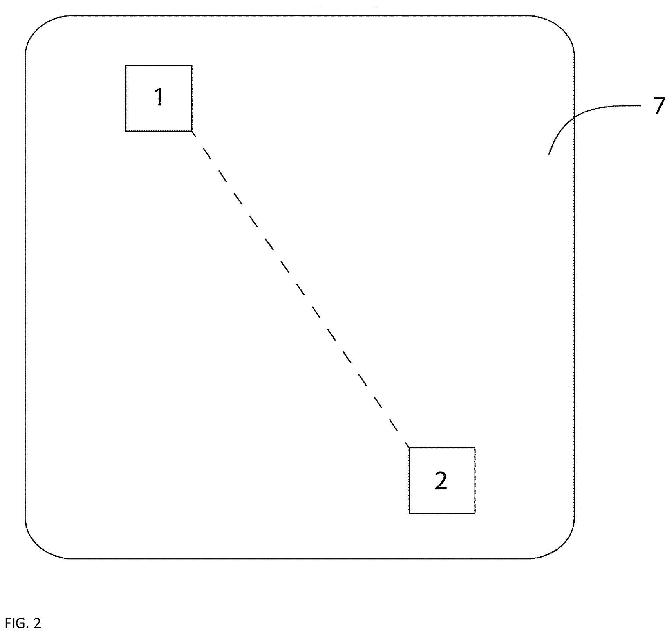

In Figur 2 ist eine mögliche Konfiguration dargestellt; hierbei sind auf der Antennenebene zwei Antennen 1, 2 vorgesehen, welche auf einer Trägerfläche 7 angeordnet sind, die im Wesentlichen senkrecht zur Zugangsebene verläuft. Die Länge der Trägerfläche 7 entspricht bei dem gezeigten Beispiel im Wesentlichen der Länge des Zugangsbereichs. Die Antennen 1, 2 sind jeweils in der Nähe einer oberen und einer diametral gegenüberliegenden unteren Ecke des Trägers 7 angeordnet, um dem Zugangsbereich abzudecken.

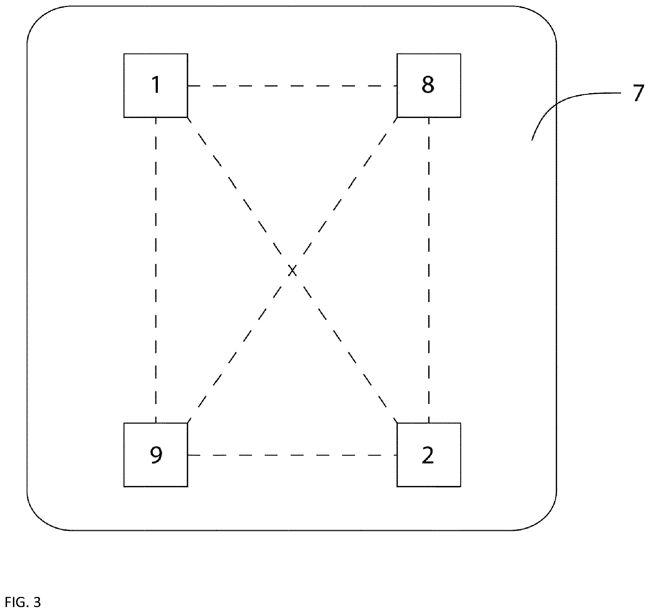

Gegenstand der Figur 3 ist eine Antennenkonfiguration, bei der auf der Trägerfläche 7 vier Antennen 1, 2, 8, 9 vorgesehen sind, die jeweils in der Nähe einer Ecke der Trägerfläche 7 angeordnet sind. Die gestrichelten Linien verbinden jeweils zwei Antennen eines möglichen Antennenpaares, wobei bei vier Antennen zur RSSI Auswertung der Beacons sechs Antennenpaare gebildet werden können; hierbei wurden mögliche virtuelle Antennen nicht berücksichtigt.

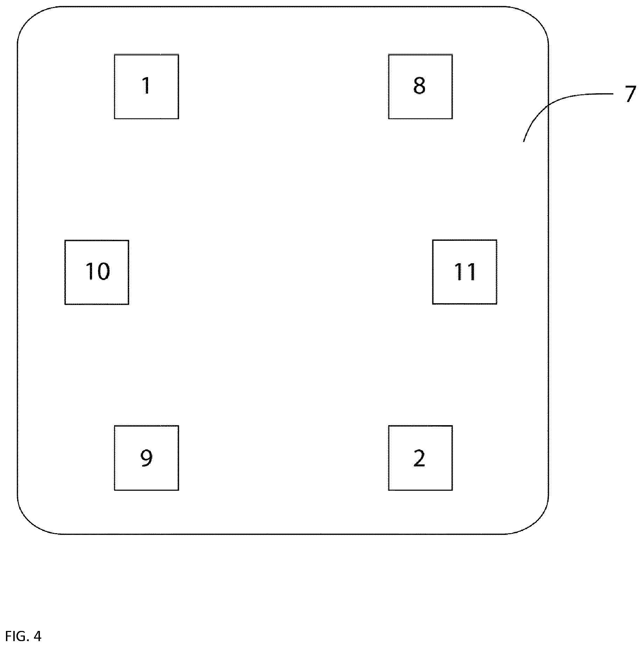

Im Rahmen weiterer Ausgestaltungen können sechs Antennen 1, 2, 8, 9, 10, 11 vorgesehen sein, wie anhand Figur 4 veranschaulicht wird. Die Antennen sind in Abhängigkeit der Form der Trägerfläche 7 derart angeordnet, dass der Zugangsbereich abgedeckt wird.

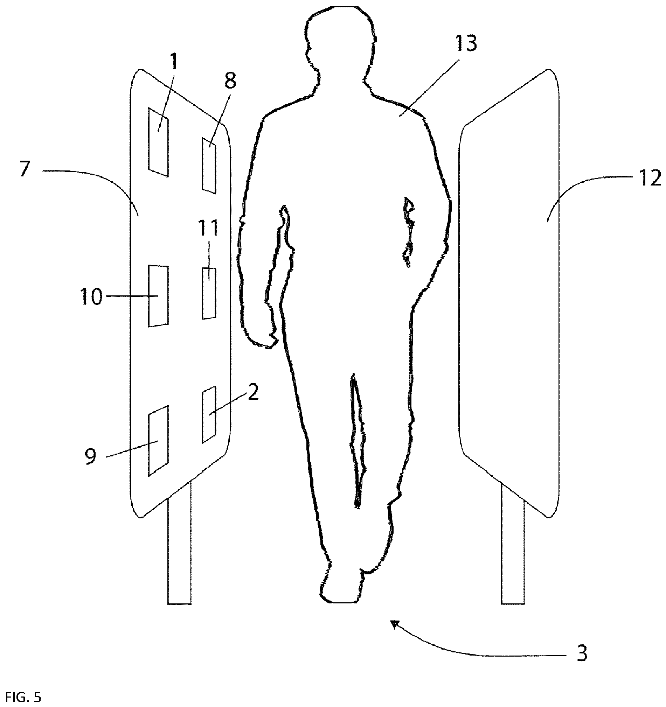

In Figur 5 ist ein Zugang schematisch dargestellt. Bei diesem Beispiel weist die Trägerfläche 7 sechs Antennen 1, 2, 8, 9, 10, 11 auf, wobei der Zugangsbereich 3 an der der Trägerfläche 7 gegenüberliegenden Seite durch ein Abgrenzungselement 12 abgegrenzt ist. Die Antennen 1, 2, 8, 9, 10, 11 sind derart angeordnet, dass ein mobiles Gerät, welches eine Person 13 bei sich trägt, die Beacons empfängt, wenn sich die Person im Zugangsbereich 3 befindet.

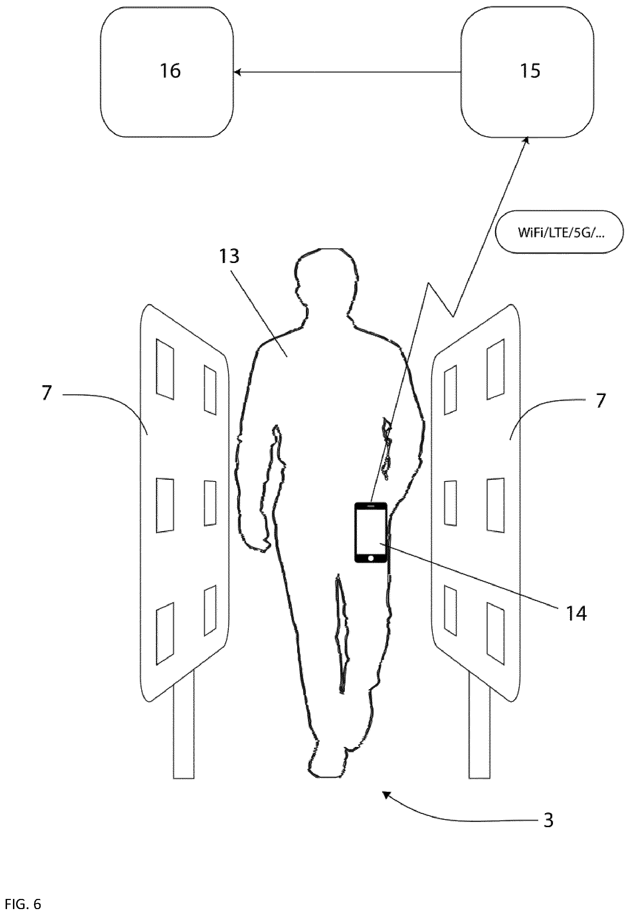

Bei der Ausgestaltung gemäß Figur 6 sind an beiden Seiten des Zugangsbereiches 3 jeweils sechs Antennen angeordnet. Wenn die RSSI Auswertung der Beacons im mobilen Gerät 14 erfolgt, und wenn mindestens eine oder eine vorgegebene Anzahl der ermittelten Distanzen des mobilen Gerätes zur Antennenebene der Antennen einer Zugangskontrollvorrichtung einen Schwellenwert unterschreitet, werden eine im mobilen Gerät 14 gespeicherte ID, der eine Zugangsberechtigung eindeutig zuordenbar ist und die über die Beacons empfangene Zugangs-ID der Zugangskontrollvorrichtung an einen Server 15 des Zugangskontrollsystems oder an die Zugangskontrollvorrichtung 16 zur Auswertung der Gültigkeit der der ID zugeordneten Zugangsberechtigung über einen Standard zur drahtlosen Kommunikation, beispielsweise über WIFI, LTE, 5G übermittelt, wobei bei für die Zugangs-ID gültiger Zugangsberechtigung Zugang gewährt wird. Bei dem gezeigten Beispiel erfolgt die Übermittlung an einen Server 15, welcher nach der Überprüfung bzw. Auswertung der Gültigkeit der der ID zugeordneten Zugangsberechtigung die Ergebnisse an die jeweilige Zugangskontrollvorrichtung 16 übermittelt, wobei bei für die Zugangs-ID der Zugangskontrollvorrichtung 16 gültiger Zugangsberechtigung, beispielweise durch eine Steuerung eines Sperrorgans der Zugangskontrollvorrichtung, Zugang gewährt wird.

Ein erfindungsgemäßes System zur Zugangskontrolle, insbesondere ein System zur Durchführung des erfindungsgemäßen Verfahrens umfasst demnach vorzugsweise zumindest eine Zugangskontrollvorrichtung, welche jeweils einem Zugang zugeordnet ist, wobei jede Zugangskontrollvorrichtung zumindest eine am Zugang definiert angeordnete Antenne aufweist, welche in den Zugangsbereich, d.h. in einen Bereich vorgegebener Länge und Breite, welchen ein Besucher beim Zugang durchschreiten muss und in dem sich bedingt durch dessen Dimensionierung nur eine Person befinden kann, abstrahlt, wobei sämtliche Antennen einer Zugangskontrollvorrichtung auf einer Antennenebene liegen, wobei die zumindest eine Antenne ausgebildet ist, um in vorgegebenen Abständen Beacons, vorzugsweise BLE-Beacons, enthaltend eine eindeutige Zugangs-ID, welche den Zugang, an dem die zumindest eine Antenne angebracht ist, eindeutig identifiziert und eine eindeutige Antennen-ID zu senden, wobei die von einem mobilen Gerät empfangenen Beacons anhand der RSSIs (Received Signal Strength Indicator) auswertbar sind, wodurch die Distanz des mobilen Gerätes zu der zumindest einen Antenne ermittelbar ist, wobei, wenn die ermittelte Distanz des mobilen Gerätes zur zumindest einer Antenne einer Zugangskontrollvorrichtung einen Schwellenwert unterschreitet, eine im mobilen Gerät gespeicherte ID, der eine Zugangsberechtigung eindeutig zuordenbar ist und die empfangene Zugangs-ID dieser Zugangskontrollvorrichtung an einen Server des Systems oder an die Zugangskontrollvorrichtung zur Auswertung der Gültigkeit der der ID zugeordneten Zugangsberechtigung über einen Standard zur drahtlosen Kommunikation übermittelbar sind, wobei bei für die Zugangs-ID gültiger Zugangsberechtigung Zugang gewährt wird.

Gemäß einer vorteilhaften Ausgestaltung des Systems weist die zumindest eine Zugangskontrollvorrichtung zumindest zwei vorgegeben und in definiertem Abstand zueinander angeordnete Antennen auf, wobei sämtliche Antennen auf einer Antennenebene liegen, wobei aus den vorhandenen n Antennen mindestens ein

und maximal $\binom{n}{2}$ Antennenpaare bildbar sind, wobei anhand der empfangenen Beacons von jeweils zwei Antennen eines Antennenpaares durch Bilateration eine Distanz des mobilen elektronischen Gerätes (14) zu einer virtuellen Linie auf der Antennenebene, welche die Antennen des jeweiligen Antennenpaares miteinander verbindet und somit zur Antennenebene als Länge der Lotstrecke der am weitesten von der Antennenebene entfernten möglichen Position des mobilen elektronischen Gerätes (14) zur virtuellen Linie und zur Antennebene ermittelbar ist und wobei die ermittelten Distanzen zu der virtuellen Linie auf der Antennenebene, welche die Antennen des jeweiligen Antennenpaares miteinander verbindet, auswertbar sind, um festzustellen, ob mindestens eine oder eine vorgegebene Anzahl der ermittelten Distanzen einer Zugangskontrollvorrichtung unter einem bestimmten Schwellenwert fällt, wobei, wenn dies der Fall ist, eine im mobilen Gerät gespeicherte ID, der eine Zugangsberechtigung eindeutig zuordenbar ist und die empfangene Zugangs-ID dieser Zugangskontrollvorrichtung an einen Server oder an die Zugangskontrollvorrichtung zur Auswertung der Gültigkeit der der ID zugeordneten Zugangsberechtigung über einen Standard zur drahtlosen Kommunikation übermittelbar sind, wobei bei für die Zugangs-ID gültiger Zugangsberechtigung Zugang gewährt wird.

**Patentansprüche**

1. Verfahren zur Zugangskontrolle bei einem Zugangskontrollsystem für Personen umfassend zumindest eine Zugangskontrollvorrichtung (16), welche jeweils einem Zugang zugeordnet ist, wobei jede Zugangskontrollvorrichtung (16) zumindest eine am Zugang definiert angeordnete Antenne (1, 2, 8, 9, 10, 11) aufweist, welche in den Zugangsbereich (3), d.h. in einen Bereich vorgegebener Länge und Breite, welchen ein Besucher beim Zugang durchschreiten muss und in dem sich bedingt durch dessen Dimensionierung nur eine Person befinden kann, abstrahlt, wobei sämtliche Antennen (1, 2, 8, 9, 10, 11) einer Zugangskontrollvorrichtung (16) auf einer Antennenebene liegen, wobei die zumindest eine Antenne (1, 2, 8, 9, 10, 11) in vorgegebenen Abständen Beacons enthaltend eine eindeutige Zugangs-ID, welche den Zugang, an dem die zumindest eine Antenne (1, 2, 8, 9, 10, 11) angebracht ist, eindeutig identifiziert und eine eindeutige Antennen-ID sendet, wobei die von einem mobilen Gerät (14) empfangenen Beacons anhand der RSSIs (Received Signal Strength Indicator) ausgewertet werden, wodurch die Distanz des mobilen Gerätes (14) zu der zumindest einen Antenne (1, 2, 8, 9, 10, 11) ermittelt wird, wobei, wenn die ermittelte Distanz des mobilen Gerätes (14) zur zumindest einer Antenne (1, 2, 8, 9, 10, 11) einer Zugangskontrollvorrichtung (16) einen Schwellenwert unterschreitet, eine im mobilen Gerät (14) gespeicherte ID, der eine Zugangsberechtigung eindeutig zuordenbar ist und die empfangene Zugangs-ID dieser Zugangskontrollvorrichtung (16) an einen Server (15) oder an die Zugangskontrollvorrichtung (16) zur Auswertung der Gültigkeit der der ID zugeordneten Zugangsberechtigung übermittelt werden, wobei bei für die Zugangs-ID gültiger Zugangsberechtigung Zugang gewährt wird.

2. Verfahren zur Zugangskontrolle nach Anspruch 1, **dadurch gekennzeichnet, dass** die zumindest eine Zugangskontrollvorrichtung (16) zumindest zwei vorgegeben und in definiertem Abstand zueinander angeordnete Antennen (1, 2, 8, 9, 10, 11) aufweist, wobei sämtliche Antennen (1, 2, 8, 9, 10, 11) einer Zugangskontrollvorrichtung (16) auf einer Antennenebene liegen, wobei die Auswertung der von einem mobilen elektronischen Gerät (14) empfangenen Beacons dadurch erfolgt, dass in einem ersten Schritt alle empfangenen Beacons in Zugangskontrollvorrichtungen (16) basierend auf der eindeutigen Zugangs-ID gruppiert werden, wobei für jede individuelle Zugangs-ID alle zugehörigen Beacons wie folgt ausgewertet werden:

- Pro Antennen-ID wird die empfangene Signalstärke der Beacons (RSSI) optional mittels eines Moving-Average-Filters, vorzugsweise mittels eines exponentiellen Moving-Average Filters geglättet, wodurch einzelne Ausreißer in der Signalstärke gefiltert werden;

- Aus den vorhandenen n Antennen (1, 2, 8, 9, 10, 11) werden mindestens ein und maximal $\binom{n}{2}$ Antennenpaare gebildet, wobei anhand der empfangenen Signalstärke der Beacons von jeweils zwei Antennen eines Antennenpaares durch Bilateration die Distanz des mobilen elektronischen Gerätes zu einer virtuellen Linie auf der Antennenebene, welche die Antennen des jeweiligen Antennenpaares miteinander verbindet und somit zur Antennenebene als Länge der Lotstrecke der am weitesten von der Antennenebene entfernten möglichen Position des mobilen elektronischen Gerätes (14) zur virtuellen Linie und zur Antennenebene ermittelt wird;

- die ermittelten Distanzen zu der virtuellen Linie auf der Antennenebene , welche die Antennen des jeweiligen Antennenpaares miteinander verbindet, werden ausgewertet, um festzustellen, ob mindestens eine oder eine vorgegebene Anzahl der ermittelten Distanzen unter einem bestimmten Schwellenwert fällt, wobei, wenn dies der Fall ist, eine im mobilen Gerät (14) gespeicherte ID, der eine Zugangsberechtigung eindeutig zuordenbar ist und die empfangene Zugangs-ID an einen Server (15) oder an die Zugangskontrollvorrichtung (16) zur Auswertung der Gültigkeit der der ID zugeordneten Zugangsberechtigung über einen Standard zur drahtlosen Kommunikation übermittelt werden, wobei bei für die Zugangs-ID gültiger Zugangsberechtigung Zugang gewährt wird.

3.  Verfahren zur Zugangskontrolle nach Anspruch 2, **dadurch gekennzeichnet, dass** die ermittelten Distanzen des mobilen elektronischen Gerätes (14) zu einer virtuellen Linie auf der Antennenebene, welche die Antennen (1, 2, 8, 9, 10, 11) des jeweiligen Antennenpaares miteinander verbindet, dazu verwendet werden, um jeweils eine virtuelle Antenne auf der virtuellen Verbindungslinie zwischen den betrachteten Antennen des jeweiligen Antennenpaares zu definieren und ihr einen virtuellen Radius zum mobilen Gerät (14), welcher der ermittelten Distanz zu der virtuellen Linie entspricht, an der Position (6) der virtuellen Antenne zuzuweisen, wobei die Position (6) der virtuellen Antenne dem Lotfußpunkt der Lotstrecke der am weitesten von der Antennenebene entfernten möglichen Position des mobilen elektronischen Gerätes (14) zur virtuellen Linie und zur Antennenebene entspricht, wobei die zumindest eine dadurch definierte virtuelle Antenne verwendet wird, um in Kombination mit einer weiteren Antenne, die eine virtuelle Antenne sein kann, ein virtuelles Antennenpaar zu bilden und mittels Bilateration die Distanz des mobilen elektronischen Gerätes (14) zu einer virtuellen Linie auf der Antennenebene, welche die Antennen des virtuellen Antennenpaares miteinander verbindet und somit zur Antennenebene als Länge der Lotstrecke der am weitesten von der Antennenebene entfernten möglichen Position des mobilen elektronischen Gerätes (14) zur virtuellen Linie und zur Antennenebene zu ermitteln, wobei sämtliche ermittelte Distanzen des mobilen elektronischen Gerätes (14) ausgewertet werden.

4.  Verfahren zur Zugangskontrolle nach Anspruch 1, 2 oder 3, **dadurch gekennzeichnet, dass** die Antennen (1, 2, 8, 9, 10, 11) als Richtantennen ausgeführt sind und/oder dass die Antennen (1, 2, 8, 9, 10, 11) gezielt abgeschirmt sind, um die Richtcharakteristik in Richtung des Zugangsbereichs zu maximieren.

5.  Verfahren zur Zugangskontrolle nach einem der vorangehenden Ansprüche, **dadurch gekennzeichnet, dass** die Sendestärke jeder Antenne (1, 2, 8, 9, 10, 11) angepasst werden kann, um dadurch den gewünschten Erkennungsbereich im Zugangsbereich besser modellieren zu können.

6.  Verfahren zur Zugangskontrolle nach einem der vorangehenden Ansprüche, **dadurch gekennzeichnet, dass** bei der RSSI Auswertung der Beacons das Modell des jeweiligen mobilen Gerätes (14) dadurch berücksichtigt wird, dass ein modellspezifischer Korrekturwert für den Schwellenwert herangezogen wird, um Unterschiede hinsichtlich der Empfangssensitivität auszugleichen.

7.  Verfahren zur Zugangskontrolle nach einem der vorangehenden Ansprüche, **dadurch gekennzeichnet, dass** zur Optimierung der RSSI-Auswertung der Beacons Daten vorhandener Distanz- Sensoren der mobilen Geräte (14) verwendet werden, um feststellen zu können, ob ein mobiles Gerät (14) in einer Tasche des Benutzers steckt, wobei, wenn dies der Fall ist, zusätzlich ein Offset verwendet wird, welcher den Schwellenwert erhöht.

8.  Verfahren zur Zugangskontrolle nach einem der vorangehenden Ansprüche, **dadurch gekennzeichnet, dass** zur Optimierung der RSSI-Auswertung der Beacons ermittelt wird, ob das mobile Gerät (14) gerade in Verwendung ist, wobei, wenn dies der Fall ist, zusätzlich ein Offset verwendet wird, welcher den Schwellenwert verringert.

9.  Verfahren zur Zugangskontrolle nach einem der vorangehenden Ansprüche, **dadurch gekennzeichnet, dass** die RSSI Auswertung der Beacons im mobilen Gerät (14) erfolgt, wobei wenn mindestens eine oder eine vorgegebene Anzahl der ermittelten Distanzen des mobilen Gerätes zu der Antennenebene einer Zugangskontrollvorrichtung (16) einen Schwellenwert unterschreitet, eine im mobilen Gerät

(14) gespeicherte ID, der eine Zugangsberechtigung eindeutig zuordenbar ist und die empfangene Zugangs-ID dieser Zugangskontrollvorrichtung (16) an einen Server (15) oder an die Zugangskontrollvorrichtung (16) über einen Standard zur drahtlosen Kommunikation zur Auswertung der Gültigkeit der der ID zugeordneten Zugangsberechtigung übermittelt werden, wobei bei für die Zugangs-ID gültiger Zugangsberechtigung Zugang gewährt wird.

10. Verfahren zur Zugangskontrolle nach Anspruch 9, **dadurch gekennzeichnet, dass** im mobilen Gerät (14) die ermittelten Distanzen bei jedem Zutritt aufgezeichnet werden, wobei bei n-maliger Unterschreitung eines vorgegebenen unteren Schwellenwertes, wobei n eine vorgegebene ganze Zahl $\geq 1$ ist, die empfangenen Signalstärken der empfangenen Beacons vor der RSSI Auswertung um einen vorgegebenen Faktor reduziert werden, wodurch ein Übersprechen vermieden wird.

11. Verfahren zur Zugangskontrolle nach einem der vorangehenden Ansprüche 1-8, **dadurch gekennzeichnet, dass** die RSSI Auswertung der Beacons in einem Server (15) erfolgt, wobei zu diesem Zweck zwischen dem mobilen Gerät (14) und dem Server (15) eine Verbindung mittels eines Standards zur drahtlosen Kommunikation hergestellt wird, wobei mittels der Verbindung die empfangenen Beacons gemeinsam mit der im mobilen Gerät (14) gespeicherten ID, der eine Zugangsberechtigung eindeutig zuordenbar ist und der empfangenen Zugangs-ID, optional die Daten vorhandener Distanz-Sensoren, optional die Information ob das mobile Gerät (14) gerade in Verwendung ist und optional das Modell des jeweiligen mobilen Gerätes (14) an den Server (15) weitergeleitet werden, wobei wenn mindestens eine oder eine vorgegebene Anzahl der ermittelten Distanzen zu der Antennenebene einer Zugangskontrollvorrichtung (16) einen Schwellenwert unterschreitet, eine Auswertung der Gültigkeit der der ID zugeordneten Zugangsberechtigung durchgeführt wird, wobei bei für die Zugangs-ID gültiger Zugangsberechtigung Zugang gewährt wird.

12. Verfahren zur Zugangskontrolle nach einem der vorangehenden Ansprüche, **dadurch gekennzeichnet, dass** die im mobilen Gerät (14) durchzuführenden Schritte durch eine App gesteuert werden, wobei in der App die Antennenkonfiguration der Antennen (1, 2, 8, 9, 10, 11) der Zugangskontrollvorrichtungen (16) hinterlegt ist.

13. Verfahren zur Zugangskontrolle nach Anspruch 12, **dadurch gekennzeichnet, dass** in der App die Antennenkonfiguration der Antennen (1, 2, 8, 9, 10, 11) der Zugangskontrollvorrichtungen (16) in Abhängigkeit der Zugangs-ID hinterlegt ist.

14. Verfahren zur Zugangskontrolle nach einem der vorangehenden Ansprüche, **dadurch gekennzeichnet, dass** die Beacons BLE (Bluetooth Low Energy)-Beacons sind.

15. Verfahren zur Zugangskontrolle nach einem der vorangehenden Ansprüche, **dadurch gekennzeichnet, dass** der Standard zur drahtlosen Kommunikation zwischen dem mobilen Gerät (14) und Komponenten des Zugangskontrollsystems ein WIFI, GSM, LTE, 5G oder Bluetooth Standard ist.

16. System zur Zugangskontrolle für Personen, insbesondere zur Durchführung des Verfahrens nach einem der vorangehenden Ansprüche, umfassend zumindest eine Zugangskontrollvorrichtung (16), welche jeweils einem Zugang zugeordnet ist, **dadurch gekennzeichnet, dass** jede Zugangskontrollvorrichtung (16) zumindest eine am Zugang definiert angeordnete Antenne (1, 2, 8, 9, 10, 11) aufweist, welche in den Zugangsbereich (3), d.h. in einen Bereich vorgegebener Länge und Breite, welchen ein Besucher beim Zugang durchschreiten muss und in dem sich bedingt durch dessen Dimensionierung nur eine Person befinden kann, abstrahlt, wobei sämtliche Antennen (1, 2, 8, 9, 10, 11) einer Zugangskontrollvorrichtung (16) auf einer Antennenebene liegen, wobei die zumindest eine Antenne (1, 2, 8, 9, 10, 11) ausgebildet ist, um in vorgegebenen Abständen Beacons enthaltend eine eindeutige Zugangs-ID, welche den Zugang, an dem die zumindest eine Antenne (1, 2, 8, 9, 10, 11) angebracht ist, eindeutig identifiziert und eine eindeutige Antennen-ID zu senden, wobei die von einem mobilen Gerät (14) empfangenen Beacons anhand der RSSIs (Received Signal Strength Indicator) auswertbar sind, wodurch die Distanz des mobilen Gerätes (14) zu der zumindest einen Antenne (1, 2, 8, 9, 10, 11) ermittelbar ist, wobei, wenn die ermittelte Distanz des mobilen Gerätes (14) zur zumindest einer Antenne (1, 2, 8, 9, 10, 11) einer Zugangskontrollvorrichtung (16) einen Schwellenwert unterschreitet, eine im mobilen Gerät (14) gespeicherte ID, der eine Zugangsberechtigung eindeutig zuordenbar ist und die empfangene Zugangs-ID dieser Zugangskontrollvorrichtung (16) an einen Server (15) oder an die Zugangskontrollvorrichtung (16) zur Auswertung der Gültigkeit der der ID zugeordneten Zugangsberechtigung über einen Standard zur drahtlosen Kommunikation übermittelbar sind, wobei bei für die Zugangs-ID gültiger Zugangsberechtigung Zugang gewährt wird.

17. System zur Zugangskontrolle für Personen nach Anspruch 16, **dadurch gekennzeichnet, dass** die zumindest eine Zugangskontrollvorrichtung (16) zumindest zwei vorgegeben und in definiertem Abstand zueinander angeordnete Antennen (1, 2, 8, 9, 10, 11) aufweist, wobei sämtliche Antennen einer Zugangskontrollvorrichtung (16) auf einer Antennenebene liegen, wobei aus den vorhandenen n Antennen (1, 2, 8, 9, 10, 11) mindestens ein und maximal $\binom{n}{2}$ Antennenpaare bildbar sind, wobei anhand der empfangenen Beacons von jeweils zwei Antennen eines Antennenpaares durch Bilateration eine Distanz des mobilen elektronischen Gerätes (14) zu einer virtuellen Linie auf der Antennenebene, welche die Antennen des jeweiligen Antennenpaares miteinander verbindet und somit zur Antennenebene als Länge der Lotstrecke der am weitesten von der Antennenebene entfernten möglichen Position des mobilen elektronischen Gerätes (14) zur virtuellen Linie und zur Antennenebene ermittelbar ist und wobei die ermittelten Distanzen zu der virtuellen Linie auf der Antennenebene , welche die Antennen des jeweiligen Antennenpaares miteinander verbindet, auswertbar sind, um festzustellen, ob mindestens eine oder eine vorgegebene Anzahl der ermittelten Distanzen zu der Antennenebene einer Zugangskontrollvorrichtung (16) unter einem bestimmten Schwellenwert fällt, wobei, wenn dies der Fall ist, eine im mobilen Gerät (14) gespeicherte ID, der eine Zugangsberechtigung eindeutig zuordenbar ist und die empfangene Zugangs-ID dieser Zugangskontrollvorrichtung (16) an den Server (15) oder an die Zugangskontrollvorrichtung (16) zur Auswertung der Gültigkeit der der ID zugeordneten Zugangsberechtigung über einen Standard zur drahtlosen Kommunikation übermittelbar sind, wobei bei für die Zugangs-ID gültiger Zugangsberechtigung Zugang gewährt wird.

**Geänderte Patentansprüche gemäss Regel 137(2) EPÜ.**

1. Verfahren zur Zugangskontrolle bei einem Zugangskontrollsystem für Personen umfassend zumindest eine Zugangskontrollvorrichtung (16), welche jeweils einem Zugang zugeordnet ist, wobei jede Zugangskontrollvorrichtung (16) zumindest eine am Zugang definiert angeordnete Antenne (1, 2, 8, 9, 10, 11) aufweist, welche in den Zugangsbereich (3), d.h. in einen Bereich vorgegebener Länge und Breite, welchen ein Besucher beim Zugang durchschreiten muss und in dem sich bedingt durch dessen Dimensionierung nur eine Person befinden kann, abstrahlt, wobei sämtliche Antennen (1, 2, 8, 9, 10, 11) einer Zugangskontrollvorrichtung (16) auf einer Antennenebene liegen, wobei die zumindest eine Antenne (1, 2, 8, 9, 10, 11) in vorgegebenen Abständen Beacons enthaltend eine eindeutige Zugangs-ID, welche den Zugang, an dem die zumindest eine Antenne (1, 2, 8, 9, 10, 11) angebracht ist, eindeutig identifiziert und eine eindeutige Antennen-ID sendet, wobei die von einem mobilen Gerät (14) empfangenen Beacons anhand der RSSIs (Received Signal Strength Indicator) ausgewertet werden, wodurch die Distanz des mobilen Gerätes (14) zu der zumindest einen Antenne (1, 2, 8, 9, 10, 11) ermittelt wird, wobei, wenn die ermittelte Distanz des mobilen Gerätes (14) zur zumindest einer Antenne (1, 2, 8, 9, 10, 11) einer Zugangskontrollvorrichtung (16) einen Schwellenwert unterschreitet, eine im mobilen Gerät (14) gespeicherte ID, der eine Zugangsberechtigung eindeutig zuordenbar ist und die empfangene Zugangs-ID dieser Zugangskontrollvorrichtung (16) an einen Server (15) oder an die Zugangskontrollvorrichtung (16) zur Auswertung der Gültigkeit der der ID zugeordneten Zugangsberechtigung übermittelt werden, wobei bei für die Zugangs-ID gültiger Zugangsberechtigung Zugang gewährt wird.

2. Verfahren zur Zugangskontrolle nach Anspruch 1, **dadurch gekennzeichnet, dass** die zumindest eine Zugangskontrollvorrichtung (16) zumindest zwei vorgegeben und in definiertem Abstand zueinander angeordnete Antennen (1, 2, 8, 9, 10, 11) aufweist, wobei sämtliche Antennen (1, 2, 8, 9, 10, 11) einer Zugangskontrollvorrichtung (16) auf einer Antennenebene liegen, wobei die Auswertung der von einem mobilen elektronischen Gerät (14) empfangenen Beacons dadurch erfolgt, dass in einem ersten Schritt alle empfangenen Beacons in Zugangskontrollvorrichtungen (16) basierend auf der eindeutigen Zugangs-ID gruppiert werden, wobei für jede individuelle Zugangs-ID alle zugehörigen Beacons wie folgt ausgewertet werden:

   - Pro Antennen-ID wird die empfangene Signalstärke der Beacons (RSSI) optional mittels eines Moving-Average-Filters, vorzugsweise mittels eines exponentiellen Moving-Average Filters geglättet, wodurch einzelne Ausreißer in der Signalstärke gefiltert werden;
   - Aus den vorhandenen n Antennen (1, 2, 8, 9, 10, 11) werden mindestens ein und maximal $\binom{n}{2}$ Antennenpaare gebildet, wobei anhand der empfangenen Signalstärke der Beacons von jeweils zwei Antennen eines Antennenpaares durch Bilateration die Distanz des mobilen elektronischen Gerätes zu einer virtuellen Linie auf der Antennenebene, welche die Antennen des jeweiligen Antennenpaares miteinander verbindet und somit zur Antennenebene als Länge der Lotstrecke der am weitesten von der Antennenebene entfernten möglichen Position des mobilen elektronischen Gerätes (14) zur virtuellen Linie und zur Antennenebene ermittelt wird;
   - die ermittelten Distanzen zu der virtuellen Linie auf der Antennenebene , welche die Antennen des jeweiligen Antennenpaares miteinander verbindet, werden ausgewertet, um festzustellen, ob mindestens eine oder eine vorgegebene Anzahl der ermittelten Distanzen unter einem bestimmten Schwellenwert fällt, wobei, wenn dies der Fall ist, eine im mobilen Gerät (14) gespeicherte ID, der eine Zugangsberechtigung eindeutig zuordenbar ist und die empfangene Zugangs-ID an einen Server (15) oder an die Zugangskontrollvorrichtung (16) zur Auswertung der Gültigkeit der der ID zugeordneten Zugangsberechtigung über einen Standard zur drahtlosen Kommunikation übermittelt werden, wobei bei für die Zugangs-ID gültiger Zugangsberechtigung Zugang gewährt wird.

3.  Verfahren zur Zugangskontrolle nach Anspruch 2, **dadurch gekennzeichnet, dass** die ermittelten Distanzen des mobilen elektronischen Gerätes (14) zu einer virtuellen Linie auf der Antennenebene, welche die Antennen (1, 2, 8, 9, 10, 11) des jeweiligen Antennenpaares miteinander verbindet, dazu verwendet werden, um jeweils eine virtuelle Antenne auf der virtuellen Verbindungslinie zwischen den betrachteten Antennen des jeweiligen Antennenpaares zu definieren und ihr einen virtuellen Radius zum mobilen Gerät (14), welcher der ermittelten Distanz zu der virtuellen Linie entspricht, an der Position (6) der virtuellen Antenne zuzuweisen, wobei die Position (6) der virtuellen Antenne dem Lotfußpunkt der Lotstrecke der am weitesten von der Antennenebene entfernten möglichen Position des mobilen elektronischen Gerätes (14) zur virtuellen Linie und zur Antennenebene entspricht, wobei die zumindest eine dadurch definierte virtuelle Antenne verwendet wird, um in Kombination mit einer weiteren Antenne, die eine virtuelle Antenne sein kann, ein virtuelles Antennenpaar zu bilden und mittels Bilateration die Distanz des mobilen elektronischen Gerätes (14) zu einer virtuellen Linie auf der Antennenebene, welche die Antennen des virtuellen Antennenpaares miteinander verbindet und somit zur Antennenebene als Länge der Lotstrecke der am weitesten von der Antennenebene entfernten möglichen Position des mobilen elektronischen Gerätes (14) zur virtuellen Linie und zur Antennenebene zu ermitteln, wobei sämtliche ermittelte Distanzen des mobilen elektronischen Gerätes (14) ausgewertet werden.

4.  Verfahren zur Zugangskontrolle nach Anspruch 1, 2 oder 3, **dadurch gekennzeichnet, dass** die Antennen (1, 2, 8, 9, 10, 11) als Richtantennen ausgeführt sind und/oder dass die Antennen (1, 2, 8, 9, 10, 11) gezielt abgeschirmt sind, um die Richtcharakteristik in Richtung des Zugangsbereichs zu maximieren.

5.  Verfahren zur Zugangskontrolle nach einem der vorangehenden Ansprüche, **dadurch gekennzeichnet, dass** die Sendestärke jeder Antenne (1, 2, 8, 9, 10, 11) angepasst werden kann, um dadurch den gewünschten Erkennungsbereich im Zugangsbereich besser modellieren zu können.

6.  Verfahren zur Zugangskontrolle nach einem der vorangehenden Ansprüche, **dadurch gekennzeichnet, dass** bei der RSSI Auswertung der Beacons das Modell des jeweiligen mobilen Gerätes (14) dadurch berücksichtigt wird, dass ein modellspezifischer Korrekturwert für den Schwellenwert herangezogen wird, um Unterschiede hinsichtlich der Empfangssensitivität auszugleichen.

7.  Verfahren zur Zugangskontrolle nach einem der vorangehenden Ansprüche, **dadurch gekennzeichnet, dass** zur Optimierung der RSSI-Auswertung der Beacons Daten vorhandener Distanz- Sensoren der mobilen Geräte (14) verwendet werden, um feststellen zu können, ob ein mobiles Gerät (14) in einer Hosentasche oder in einer Tragetasche bzw. in einem Rucksack des Benutzers steckt, wobei, wenn dies der Fall ist, zusätzlich ein Offset verwendet wird, welcher den Schwellenwert erhöht.

8.  Verfahren zur Zugangskontrolle nach einem der vorangehenden Ansprüche, **dadurch gekennzeichnet, dass** zur Optimierung der RSSI-Auswertung der Beacons ermittelt wird, ob das mobile Gerät (14) gerade in Verwendung ist, wobei, wenn dies der Fall ist, zusätzlich ein Offset verwendet wird, welcher den Schwellenwert verringert.

9.  Verfahren zur Zugangskontrolle nach einem der vorangehenden Ansprüche, **dadurch gekennzeichnet, dass** die RSSI Auswertung der Beacons im mobilen Gerät (14) erfolgt, wobei wenn mindestens eine oder eine vorgegebene Anzahl der ermittelten Distanzen des mobilen Gerätes zu der Antennenebene einer Zugangskontrollvorrichtung (16) einen Schwellenwert unterschreitet, eine im mobilen Gerät (14) gespeicherte ID, der eine Zugangsberechtigung eindeutig zuordenbar ist und die empfangene Zugangs-ID dieser Zugangskontrollvorrichtung (16) an einen Server (15) oder an die Zugangskontrollvorrichtung (16) über einen Standard zur drahtlosen Kommunikation zur Auswertung der Gültigkeit der der ID zugeordneten Zugangsberechtigung übermittelt werden, wobei bei für die Zugangs-ID gültiger Zugangsberechtigung Zugang gewährt wird.

10. Verfahren zur Zugangskontrolle nach Anspruch 9, **dadurch gekennzeichnet, dass** im mobilen Gerät (14) die ermittelten Distanzen bei jedem Zutritt aufgezeichnet werden, wobei bei n-maliger Unterschreitung eines vorgegebenen unteren Schwellenwertes, wobei n eine vorgegebene ganze Zahl $\geq 1$

ist, die empfangenen Signalstärken der empfangenen Beacons vor der RSSI Auswertung um einen vorgegebenen Faktor reduziert werden.

11. Verfahren zur Zugangskontrolle nach einem der vorangehenden Ansprüche 1-8, **dadurch gekennzeichnet, dass** die RSSI Auswertung der Beacons in einem Server (15) erfolgt, wobei zu diesem Zweck zwischen dem mobilen Gerät (14) und dem Server (15) eine Verbindung mittels eines Standards zur drahtlosen Kommunikation hergestellt wird, wobei mittels der Verbindung die empfangenen Beacons gemeinsam mit der im mobilen Gerät (14) gespeicherten ID, der eine Zugangsberechtigung eindeutig zuordenbar ist und der empfangenen Zugangs-ID, optional die Daten vorhandener Distanz-Sensoren, optional die Information ob das mobile Gerät (14) gerade in Verwendung ist und optional das Modell des jeweiligen mobilen Gerätes (14) an den Server (15) weitergeleitet werden, wobei wenn mindestens eine oder eine vorgegebene Anzahl der ermittelten Distanzen zu der Antennenebene einer Zugangskontrollvorrichtung (16) einen Schwellenwert unterschreitet, eine Auswertung der Gültigkeit der der ID zugeordneten Zugangsberechtigung durchgeführt wird, wobei bei für die Zugangs-ID gültiger Zugangsberechtigung Zugang gewährt wird.

12. Verfahren zur Zugangskontrolle nach einem der vorangehenden Ansprüche, **dadurch gekennzeichnet, dass** die im mobilen Gerät (14) durchzuführenden Schritte durch eine App gesteuert werden, wobei in der App die Antennenkonfiguration der Antennen (1, 2, 8, 9, 10, 11) der Zugangskontrollvorrichtungen (16) hinterlegt ist.

13. Verfahren zur Zugangskontrolle nach Anspruch 12, **dadurch gekennzeichnet, dass** in der App die Antennenkonfiguration der Antennen (1, 2, 8, 9, 10, 11) der Zugangskontrollvorrichtungen (16) in Abhängigkeit der Zugangs-ID hinterlegt ist.

14. Verfahren zur Zugangskontrolle nach einem der vorangehenden Ansprüche, **dadurch gekennzeichnet, dass** die Beacons BLE (Bluetooth Low Energy)-Beacons sind.

15. Verfahren zur Zugangskontrolle nach einem der vorangehenden Ansprüche, **dadurch gekennzeichnet, dass** der Standard zur drahtlosen Kommunikation zwischen dem mobilen Gerät (14) und Komponenten des Zugangskontrollsystems ein WIFI, GSM, LTE, 5G oder Bluetooth Standard ist.

16. System zur Zugangskontrolle für Personen, insbesondere zur Durchführung des Verfahrens nach einem der vorangehenden Ansprüche, umfassend zumindest eine Zugangskontrollvorrichtung (16), welche jeweils einem Zugang zugeordnet ist, **dadurch gekennzeichnet, dass** jede Zugangskontrollvorrichtung (16) zumindest eine am Zugang definiert angeordnete Antenne (1, 2, 8, 9, 10, 11) aufweist, welche in den Zugangsbereich (3), d.h. in einen Bereich vorgegebener Länge und Breite, welchen ein Besucher beim Zugang durchschreiten muss und in dem sich bedingt durch dessen Dimensionierung nur eine Person befinden kann, abstrahlt, wobei sämtliche Antennen (1, 2, 8, 9, 10, 11) einer Zugangskontrollvorrichtung (16) auf einer Antennenebene liegen, wobei die zumindest eine Antenne (1, 2, 8, 9, 10, 11) ausgebildet ist, um in vorgegebenen Abständen Beacons enthaltend eine eindeutige Zugangs-ID, welche den Zugang, an dem die zumindest eine Antenne (1, 2, 8, 9, 10, 11) angebracht ist, eindeutig identifiziert und eine eindeutige Antennen-ID zu senden, wobei die von einem mobilen Gerät (14) empfangenen Beacons anhand der RSSIs (Received Signal Strength Indicator) auswertbar sind, wodurch die Distanz des mobilen Gerätes (14) zu der zumindest einen Antenne (1, 2, 8, 9, 10, 11) ermittelbar ist, wobei, wenn die ermittelte Distanz des mobilen Gerätes (14) zur zumindest einer Antenne (1, 2, 8, 9, 10, 11) einer Zugangskontrollvorrichtung (16) einen Schwellenwert unterschreitet, eine im mobilen Gerät (14) gespeicherte ID, der eine Zugangsberechtigung eindeutig zuordenbar ist und die empfangene Zugangs-ID dieser Zugangskontrollvorrichtung (16) an einen Server (15) oder an die Zugangskontrollvorrichtung (16) zur Auswertung der Gültigkeit der der ID zugeordneten Zugangsberechtigung über einen Standard zur drahtlosen Kommunikation übermittelbar sind, wobei bei für die Zugangs-ID gültiger Zugangsberechtigung Zugang gewährt wird.

17. System zur Zugangskontrolle für Personen nach Anspruch 16, **dadurch gekennzeichnet, dass** die zumindest eine Zugangskontrollvorrichtung (16) zumindest zwei vorgegeben und in definiertem Abstand zueinander angeordnete Antennen (1, 2, 8, 9, 10, 11) aufweist, wobei sämtliche Antennen einer Zugangskontrollvorrichtung (16) auf einer Antennenebene liegen, wobei aus den vorhandenen n Antennen (1, 2, 8, 9, 10, 11) mindestens ein und maximal $\binom{n}{2}$ Antennenpaare bildbar sind, wobei anhand der empfangenen Beacons von jeweils zwei Antennen eines Antennenpaares durch Bilateration eine Distanz des mobilen elektronischen Gerätes (14) zu einer virtuellen Linie auf der Antennenebene, welche die Antennen des jeweiligen Antennenpaares miteinander verbindet und somit zur Antennenebene als Länge der Lotstrecke der am weitesten von der Antennenebene entfernten möglichen Position des mobilen elektronischen Gerätes (14) zur virtuellen Linie und zur Antennenebene ermittelbar ist und wobei die ermittelten Distanzen zu der virtuellen Linie auf der Antennenebene , welche die Antennen des jeweiligen Antennenpaares miteinander verbindet, auswertbar sind, um festzustellen, ob mindestens eine oder eine vorgegebene Anzahl der ermittelten Distanzen zu der Antennenebene einer Zugangskontrollvorrichtung (16) unter einem bestimmten Schwellenwert fällt, wobei, wenn dies der Fall ist, eine im mobilen Gerät (14) gespeicherte ID, der eine Zugangsberechtigung eindeutig zuordenbar ist und die empfangene Zugangs-ID dieser Zugangskontrollvorrichtung (16) an den Server (15) oder an die Zugangskontrollvorrichtung (16) zur Auswertung der Gültigkeit der der ID zugeordneten Zugangsberechtigung über einen Standard zur drahtlosen Kommunikation übermittelbar sind, wobei bei für die Zugangs-ID gültiger Zugangsberechtigung Zugang ge-währt wird.

FIG. 1

FIG. 2

FIG. 3

FIG. 4

FIG. 5

16

15

13

WiFi/LTE/5G/...

7

7

14

3

FIG. 6

Europäisches Patentamt
European Patent Office
Office européen des brevets

## EUROPÄISCHER RECHERCHENBERICHT

**Nummer der Anmeldung**

EP 20 20 2025

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | WO 2018/174944 A1 (BYTEMARK INC [US]) 27. September 2018 (2018-09-27)<br>* Zusammenfassung; Abbildungen 3-11,14 *<br>* Absätze [0002], [0006], [0009], [0011] *<br>* Absätze [0043] - [0049], [0056] - [0059] *<br>* Absätze [0083], [0104] - [0114] *<br>----- | 1,4-6, 8-16<br>2,3,17<br>7 | INV.<br>G07C9/28<br>G07C9/20<br><br>ADD.<br>G07C9/15 |
| X<br>Y<br>A | EP 2 991 041 A2 (ACCENTURE GLOBAL SERVICES LTD [IE]) 2. März 2016 (2016-03-02)<br>* Zusammenfassung; Abbildungen 1,4,9,10,11,12,26 *<br>* Absätze [0016], [0019] - [0023] *<br>* Absätze [0028] - [0033] *<br>* Absätze [0056] - [0079] *<br>* Absätze [0197] - [0204] *<br>----- | 1,4-6, 8-16<br>2,3,17<br>7 | |
| A | JAGTAP V S ET AL: "Augmented Execution in Mobile Cloud Computing: A Survey", 2014 INTERNATIONAL CONFERENCE ON ELECTRONIC SYSTEMS, SIGNAL PROCESSING AND COMPUTING TECHNOLOGIES, IEEE, 9. Januar 2014 (2014-01-09), Seiten 237-244, XP032570226, DOI: 10.1109/ICESC.2014.46 [gefunden am 2014-02-19]<br>* Zusammenfassung; Abbildung 3 *<br>----- | 11 | **RECHERCHIERTE SACHGEBIETE (IPC)**<br><br>G07C<br>G07B |
| A | EP 3 131 065 A1 (SKIDATA AG [AT]) 15. Februar 2017 (2017-02-15)<br>* Zusammenfassung; Abbildungen 1,2 *<br>* Absätze [0006] - [0023] *<br>----- | 1-17 | |

Der vorliegende Recherchenbericht wurde für alle Patentansprüche erstellt

| Recherchenort | Abschlußdatum der Recherche | Prüfer |
|---|---|---|
| Den Haag | 25. März 2021 | Pfyffer, Gregor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 2025

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-03-2021

| Im Recherchenbericht angeführtes Patentdokument | Datum der Veröffentlichung | Mitglied(er) der Patentfamilie | Datum der Veröffentlichung |
|---|---|---|---|
| WO 2018174944 A1 | 27-09-2018 | CA 3055031 A1<br>EP 3603037 A1<br>WO 2018174944 A1 | 27-09-2018<br>05-02-2020<br>27-09-2018 |
| EP 2991041 A2 | 02-03-2016 | AU 2015215965 A1<br>CA 2901683 A1<br>CN 105389866 A<br>EP 2991041 A2 | 10-03-2016<br>25-02-2016<br>09-03-2016<br>02-03-2016 |
| EP 3131065 A1 | 15-02-2017 | AU 2016210786 A1<br>CA 2938261 A1<br>EP 3131065 A1<br>US 2017046889 A1 | 02-03-2017<br>14-02-2017<br>15-02-2017<br>16-02-2017 |

EPO FORM P0461

Für nähere Einzelheiten zu diesem Anhang : siehe Amtsblatt des Europäischen Patentamts, Nr.12/82